# FASCICULE DE BREVET EUROPEEN

(11) **EP 2 399 824 B1**
(45) Date de publication et mention de la délivrance du brevet: **11.09.2013**
(21) Numéro de dépôt: 11171082.8
(22) Date de dépôt: 22.06.2011
(51) Int. Cl.: F16L 3/24, H02G 3/32, B64C 1/40, B64C 1/06

(54) **Dispositif pour le maintien d'un matelas isolant et la fixation des systèmes destiné à être monté dans un aéronef**
Vorrichtung, die für den Einbau in ein Luftfahrzeug bestimmt ist, zur Fixierung einer Dämmmatte und zur Befestigung von Systemen
Device for supporting an insulating mattress and attaching systems intended to be mounted in an aircraft

(30) Priorité: 22.06.2010 FR 1002611; 10.08.2010 FR 1003324
(43) Date de publication de la demande: 28.12.2011
(73) Titulaire: Airbus Operations, 31060 Toulouse (FR)
(72) Inventeur: Holvoet, Julie, 31300 Toulouse (FR); De Kergommeaux, Matthieu, 31300 Toulouse (FR); Briois, Jean-Claude, 31830 Plaisance du Touch (FR); Michelet, Luc, 31700 Cornebarrieu (FR)
(74) Mandataire: Santarelli

(56) Documents cités:
- WO-A2-2010/004121
- DE-A1-102007 061 425
- FR-A1- 2 904 804
- US-A- 5 680 680

## Description

La présente invention concerne un dispositif de maintien de matelas isolant et de fixation de systèmes. La présente invention concerne le domaine aéronautique et plus particulièrement la construction d'aéronefs.

De manière habituelle, un fuselage d'aéronef présente une ossature formée de cadres et de lisses. L'enveloppe extérieure du fuselage est fixée sur les cadres et les lisses. Lorsque l'aéronef est destiné à voler à haute altitude, compte tenu des températures extérieures auxquelles il doit être soumis, il est nécessaire de réaliser une isolation thermique du fuselage. Il est alors connu de recouvrir la face intérieure de la peau formant l'enveloppe du fuselage de matelas isolants se présentant sous la forme de lés ou de panneaux souples. Ces matelas sont appelés matelas de peau. Il convient également d'isoler thermiquement chaque cadre. On utilise alors des matelas présentant une structure similaire à celle des matelas de peau mais dont la forme est adaptée pour venir enrober les cadres à l'intérieur du fuselage. Ces matelas sont appelés par la suite matelas de cadre.

Les cadres du fuselage servent également de supports pour divers systèmes. On entend ici par système des équipements de l'aéronef ainsi que les câblages électriques, les réseaux hydrauliques, les réseaux pneumatiques, les conduits d'air pour la ventilation et la pressurisation à l'intérieur du fuselage,....

Les cadres du fuselage sont alors percés de trous d'une part pour permettre la fixation des matelas isolants et d'autre part pour permettre le support et la fixation des systèmes. Ces trous fragilisent les cadres et doivent parfois être compensés par des renforts structuraux ce qui complique donc la conception de l'aéronef.

En outre, en ce qui concerne les matelas, il convient d'adapter leur forme aux divers dispositifs de fixation prévus. Des trous, des coupes, entailles,... doivent être prévus dans les matelas pour permettre le passage d'un dispositif de fixation, s'adapter à la structure du fuselage,... Les trous et entailles réalisés dans les matelas dégradent leur performance d'isolation et sont sources de ponts thermiques (et acoustiques) et elles réduisent donc les performances des matelas.

Il convient donc de limiter à la fois le nombre de trous réalisés dans la structure de l'aéronef (cadre et/ou autre pièce structurelle) ainsi que dans les matelas isolants (matelas de peau et matelas de cadre).

Le document FR-2 933 376 montre ainsi par exemple un dispositif de fixation de matelas isolant et un procédé de poses de matelas isolant dans un fuselage d'aéronef permettant de limiter le nombre de trous à réaliser dans les cadres de l'aéronef. Le dispositif décrit dans ce document comprend une portion formant crochet adaptée pour venir coiffer une aile du cadre et pincer ce dernier seule ou en coopération avec un élément structurel de l'aéronef de façon à assurer la fixation du dispositif au cadre. Une forme de réalisation de ce dispositif comprend une première pince de matelas de cadre porté par une première membrure destinée à s'étendre du premier côté du cadre, une deuxième pince de matelas de cadre portée par une deuxième membrure destinée à s'étendre du second côté du cadre, une première pince de matelas de peaux portée par la première membrure et une deuxième de matelas de peaux portée par la deuxième membrure. Un autre exemple de l'art antérieur est fourni par le document US 5,680,680.

La présente invention a alors pour but de fournir un système permettant d'une part le maintien de matelas isolants et d'autre part le support de systèmes en limitant à la fois les trous à réaliser dans la structure de l'aéronef (cadre,..)et d'autre part dans lesdits matelas isolants.

Avantageusement, la mise en oeuvre d'un tel système sera facile et/ou d'un prix de revient limité et/ou d'une masse aussi réduit que possible.

À cet effet, la présente invention propose un dispositif pour le maintien d'un matelas isolant et la fixation de systèmes pour un aéronef comprenant des cadres, une peau et des pièces de liaison entre la peau et les cadres, dites clips.

Selon la présente invention, ce dispositif de maintien et de fixation comprend :
- deux équerres, chaque équerre présentant une première branche destinée à être fixée à un clip de l'aéronef et une deuxième branche pourvue d'une fente,
- une pince en forme d'étrier comportant une base et deux bras, chaque bras présentant à son extrémité libre une patte de fixation adaptée pour pouvoir être insérée dans la fente de l'une desdites équerres avec un rebord qui forme une butée s'opposant au retrait la patte de fixation une fois celle-ci insérée dans ladite fente, chaque bras comportant en outre au moins un support pour recevoir un système.

De cette manière, le dispositif selon la présente invention peut venir maintenir un matelas de cadre sur un cadre en le pinçant sur celui-ci. Il peut également servir pour le support de systèmes grâce au support qu'il porte. Le dispositif est bien fixé à la structure de l'aéronef grâce aux équerres et à la coopération entre celles-ci et les extrémités libres de la pince.

Dans un dispositif selon la présente invention, on peut prévoir que la base est de forme allongée et définit un plan, dit plan de référence, et que les bras s'étendent sensiblement perpendiculairement audit plan de référence. On a ainsi une forme simple et facilement réalisable pour un dispositif selon l'invention.

Dans une forme de réalisation préférée, la base de forme allongée et les bras ne forment qu'une seule pièce.

Une variante de réalisation d'un dispositif selon l'invention prévoit qu'au moins un bras porte une rampe s'étendant sensiblement perpendiculairement par rapport au bras qui la porte, chaque rampe étant destinée à recevoir un support.

Pour une plus grande modularité et adaptabilité du dispositif selon la présente invention, au moins un support est avantageusement une pièce distincte munie de moyens d'assemblage, et la pince en forme d'étrier comporte des moyens d'assemblage complémentaires permettant de recevoir ledit support.

Selon un mode de réalisation du système dans lequel au moins un bras porte une rampe, chaque support de système comporte une embase adaptée pour s'accoupler avec un logement aménagé sur une rampe. De préférence, les logements aménagés sur les rampes sont tous identiques et les embases des supports de système sont toutes identiques, indépendamment des systèmes à fixer. Chaque support de système peut alors être accouplé à l'un quelconque des logements ménagés sur une rampe. Cette caractéristique rend les systèmes interchangeables en termes de position sur les rampes.

De préférence, l'embase de chaque support de système et chacun des logements ménagés sur les rampes présentent des sections complémentaires et comportent des moyens de verrouillage s'opposant au retrait du support de système. À noter que les moyens de verrouillage peuvent résulter de la forme complémentaire de l'embase et du logement, et/ou comprendre des moyens structurels complémentaires.

L'invention s'étend également à un aéronef comprenant au moins un dispositif selon l'invention et des systèmes fixés à l'aide dudit dispositif.

D'autres détails et avantages de la présente invention apparaîtront à la lecture de la description suivante, qui se réfère aux dessins schématiques annexés et porte sur un mode de réalisation préférentiel, fourni à titre d'exemple non limitatif. Sur ces dessins :
- la figure 1 représente une pince centrale d'un dispositif selon l'invention sans support de systèmes ;
- la figure 2 montre partiellement une structure dans un aéronef destinée à recevoir un dispositif de maintien selon la présente invention ;
- la figure 3 montre en perspective la pince centrale de la figure 1 en position dans un aéronef ;
- la figure 4 est une vue en perspective sous un autre angle de la structure de la figure 2 montée sur le cadre ;
- les figures 5 et 6 sont des vues en perspective à échelle agrandie d'un premier support de système d'un dispositif selon l'invention ;
- la figure 7 est une vue en perspective d'un second support de système d'un dispositif selon l'invention ; et
- la figure 8 montre en perspective le dispositif de la figure 4 seul.

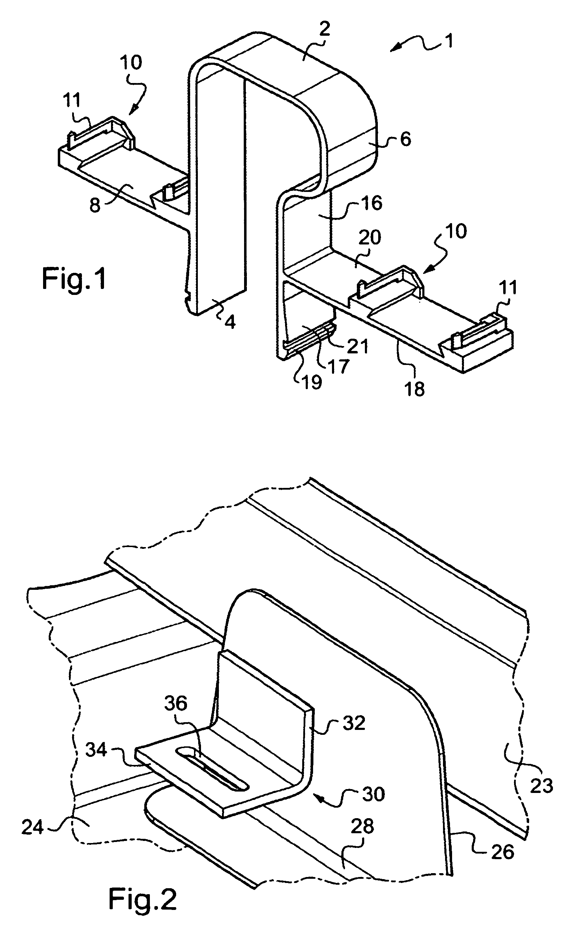

La figure 1 représente une pince 1 en forme d'étrier comportant une base 2 de laquelle s'étendent deux bras. Arbitrairement, on supposera que la base 2 s'étend sensiblement dans un plan horizontal et que les bras s'étendent dans une direction sensiblement verticale, de telle sorte qu'on ait un premier bras 4 et un second bras 6.

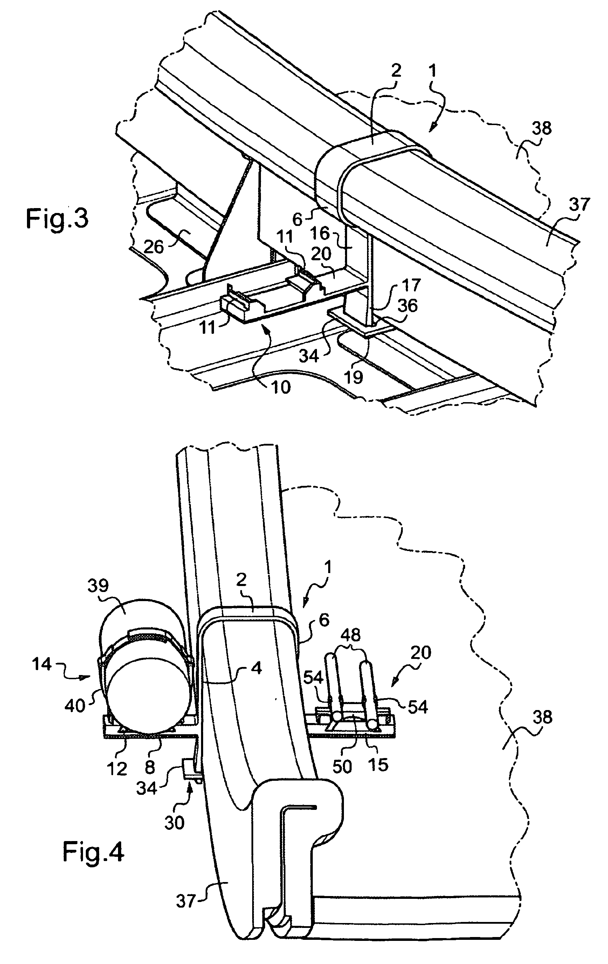

Le premier bras 4 est sensiblement plan. Il s'étend dans un plan sensiblement vertical et est relié à la base 2 par un arrondi. II comporte une première rampe 8 qui s'étend à partir du premier bras 4 parallèlement à la base 2 en s'éloignant du second bras 6. Cette première rampe 8 est de forme sensiblement rectangulaire et présente sur sa surface un logement 10 destiné à s'accoupler à une embase 12 d'un support de système 14 présenté en figures 4, 5 et 6. Chaque logement 10 est formé par deux glissières 11 s'étendant orthogonalement à la direction axiale de la première rampe 8. Chaque glissière 11 est solidaire de la rampe seulement sur une partie (dont une extrémité) de sa longueur, dite partie fixe, l'autre partie de la glissière restant libre. La partie libre de chaque glissière 11 peut s'écarter par élasticité de l'autre glissière afin de permettre l'insertion de l'embase 12 du support de système.

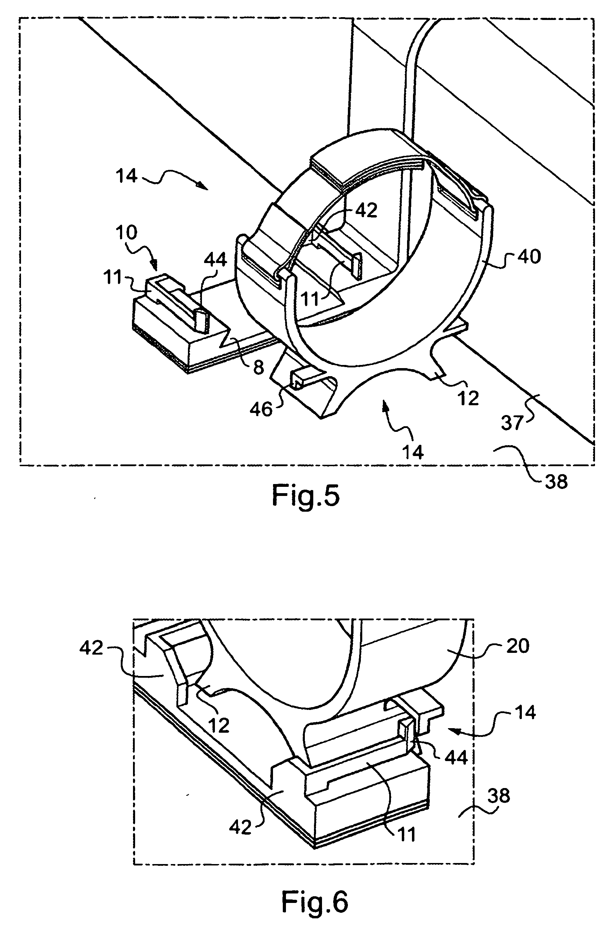

Le second bras 6 présente une forme plus complexe que le premier bras 4. En vue de côté, l'espace entre le premier bras 4 et le second bras 6 forme un L, la base du L étant disposée contre la base 2. En partant de la base 2, le second bras 6 est donc tout d'abord relativement éloigné du premier bras 4 puis se rapproche de celui-ci. Le second bras 6 comporte une partie plane 16 qui correspond à la partie rapprochée du premier bras 4. Tout comme pour le premier bras 4, et ce de façon symétrique, une seconde rampe 18 s'étend à partir du second bras 6 parallèlement à la base 2 en s'éloignant du premier bras 4. Cette seconde rampe 18 comporte une partie plane 20 de façon à ce que la seconde rampe 18 soit plus longue que la première rampe 8. Tout comme la première rampe 8, la seconde rampe 18 comporte également un logement 10 destiné à s'accoupler à un deuxième support de système 22 présenté en figures 3 et 6.

La structure montrée sur la figure 2 présente un cadre 23 sur lequel est fixée une peau 24 à l'aide de pièces appelées clips 26. Chaque clip présente une partie formant équerre 28 pour permettre de relier la peau 24 au cadre 22.

La pince 1 en forme d'étrier est fixée par chacune de ses extrémités libre à un clip 26. À cette fin, le dispositif de maintien de matelas comprend pour chacune des extrémités libres du premier bras 4 et du second bras 6 une équerre 30 telle qu'illustrée sur la figure 2. Chaque équerre 30 comprend d'une part une première branche 32 pour sa fixation à un clip 26 du fuselage ; cette fixation peut être réalisée par le collage de la première branche 32 sur le clip 26. Chaque équerre 30 comprend d'autre part une deuxième branche 34 dans laquelle l'extrémité du bras correspondant vient s'ancrer. À cette fin, la deuxième branche 34 présente une fente 36, et l'extrémité de chaque bras de la pince 1 en forme d'étrier présente une patte de fixation 17 qui vient s'insérer dans la fente 36 de l'équerre 30 comme présenté figure 3. Cette patte de fixation 17 comporte un rebord 19 à son extrémité libre. La fente 36 présente donc une largeur au moins égale à l'épaisseur de ce rebord 19 afin de permettre l'insertion dudit rebord dans ladite fente.

En position de repos, la patte de fixation 17 forme avec la direction horizontale de la base 2 de la pince 1 en forme d'étrier un angle supérieur à 90°. Lorsqu'elle est insérée dans la fente 36 dans une position dite d'ancrage (comme illustré dans la figure 3), la patte de fixation 17, qui est légèrement élastique en flexion, s'étend sensiblement orthogonalement à la direction horizontale. En position d'ancrage, la patte de fixation 17 est donc rappelée élastiquement en direction de la première branche 32 de l'équerre. Le rebord 19 de la patte de fixation 17 forme alors une butée opposant au retrait de ladite patte de fixation. Pour désolidariser la pièce en forme d'étrier 1 de l'équerre 30, il suffit d'exercer une pression contre la patte de fixation 17 de ladite pièce en forme d'étrier 1 en direction opposée à la première branche 32 de l'équerre de façon à placer le rebord 19 en regard de la fente 36, puis de tirer sur la pièce en forme d'équerre 1 en direction opposée à la peau 24 du fuselage.

De préférence, la patte de fixation 17 présente de plus un épaulement 21 au-dessus du rebord 19, lequel épaulement 21 forme une butée s'opposant à l'enfoncement de la patte de fixation 17 dans la fente 36 de l'équerre 30. En d'autres termes, le rebord 19 et l'épaulement 21 délimitent une encoche dans laquelle vient s'emboîter un bord de la fente 36 lorsque la patte de fixation 17 est en position d'ancrage.

Comme on peut le voir sur la figure 3, un matelas isolant appelé matelas de cadre 37 est disposé autour du cadre 23, entre ce dernier et la pince 1 en forme d'étrier. Grâce à l'élasticité de cette pince 1, le matelas de cadre 37 est fixement maintenu sur le cadre 23. La pince en forme d'étrier réalise un serrage entre ses bras 4 et 6.

Sur la figure 3, on remarque également la présence de matelas isolants contre la peau 24 extérieure. Ces matelas isolants se présentent sous la forme de lés s'étendant à chaque fois entre deux cadres 23. Chacun de ces matelas est appelé matelas de peau 38. Pour assurer une bonne continuité dans l'isolation, le matelas de cadre 37 est fixé à chacun des matelas de peau 38 qui se trouve de part et d'autre du cadre 23. On peut prévoir ici un système de liaison à boucles et crochets plus connu sous la marque déposée Velcro.

Le dispositif de maintien de matelas selon l'invention comprend par ailleurs des supports de système. Les figures 5 et 6 illustrent le premier support de système 14, particulièrement adapté pour recevoir un conduit 39 de circulation d'air conditionné ou autre conduit de fluide (voir figure 4). Ce support de système 14 comprend d'une part l'embase 12 pour sa fixation à la pince 1 en forme d'étrier, et d'autre part une bride 40, de section circulaire ouverte, recevant le conduit 39.

La bride 40 présente un diamètre interne correspondant sensiblement au diamètre externe du conduit 39. Elle présente en outre une élasticité à la fois suffisamment grande pour permettre l'insertion du conduit 39 dans la bride et suffisamment faible pour retenir efficacement ledit conduit.

L'embase 12 est adaptée à s'accoupler avec un des logements 10 aménagés sur la pince 1 en forme d'étrier, de préférence avec le logement 10 situé sur le rebord 8 du premier bras 4. La partie libre de chaque glissière 11 du logement 10 peut s'écarter par élasticité de l'autre glissière afin de permettre l'insertion de l'embase 12 du support de système dans le logement 10. À son extrémité fixe, chaque glissière 11 présente un retour formant butée 42 contre lequel vient s'appuyer l'embase 12 du support de système 14 lorsque ce dernier est en position de fixation. À son extrémité libre, chaque glissière 11 présente un ergot de verrouillage 44 apte à coopérer avec un doigt de verrouillage 46 du support de système pour le verrouillage du support de système 14 en position de fixation. Les glissières 11, le retour 42, l'ergot 44 et le doigt 46 s'opposent aux déplacements du support de système 14 relativement à la pince 1 en forme d'étrier dans le plan de la première rampe de son premier bras 4. Les déplacements du support de système 14 orthogonalement au plan de la première rampe 8 sont quant à eux empêchés par une forme légèrement en queue d'aronde des glissières 11 et de l'embase 12 du support de système. Le maintien du conduit est également assuré par un système de sangle réglable 47. Alternativement, la sangle peut être remplacée par système de liaison à boucles et crochets plus connu sous la marque déposée Velcro.

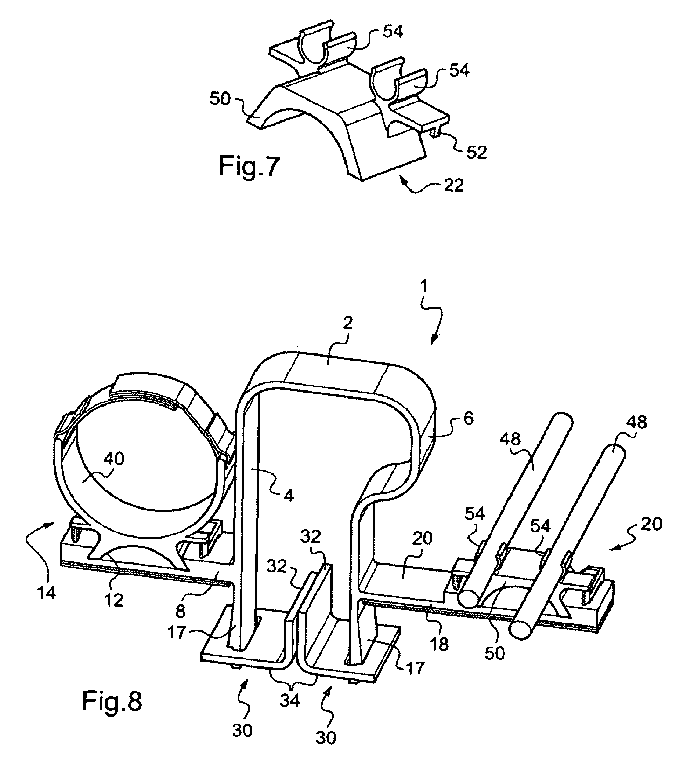

Les figures 7 et 8 illustrent le deuxième support de système 22, particulièrement adapté pour recevoir deux câbles 48 ou autres réseaux de faible section. Ce support de système 22 comprend une embase 50 identique à l'embase 12 du support de système 14, et deux doigts de verrouillage 52 identiques aux doigts de verrouillage 46 du support de système 14. À l'instar du support de système 14, le support de système 22 peut donc être agencé et fixé dans l'un quelconque des logements 10 aménagés de la pièce en forme d'étrier 1.

Le support de système 22 comprend par ailleurs deux brides 54 de section circulaire et ouverte, pour la réception des deux câbles 48. Chaque bride 54 présente un diamètre interne correspondant sensiblement au diamètre externe d'un câble 48, et une élasticité adaptée pour permettre l'insertion et le maintien dudit câble dans ladite bride.

Les divers dispositifs décrits ci-dessus permettent donc le maintien d'un matelas isolant sur un cadre ainsi que la fixation de systèmes par rapport à la structure d'un aéronef.

Un avantage de tous ces dispositifs est qu'ils peuvent facilement s'adapter notamment en ce qui concerne la fixation des systèmes. Il apparaîtra en effet à l'homme du métier que les dispositifs décrits sont modulables. On peut par exemple disposer un support de conduit électrique à la place d'un support de conduit d'air. Il est également possible d'adapter le nombre de supports de conduits portés par le dispositif. On remarque en outre que les dispositifs décrits ci-dessus permettent de s'adapter à de nombreuses solutions pour le passage des systèmes supportés et peuvent supporter tous types de systèmes car il suffit d'adapter les supports montés sur les rampes aux systèmes à fixer. Il pourrait être aussi envisagé de réaliser directement les logements pour support de système sur la pince 1 en forme d'étrier, soit sur la base 2, soit sur le premier bras 4 et/ou le second bras 6.

Les dispositifs selon la présente invention présentent également le grand avantage de pouvoir réaliser le supportage de câbles et de conduites sans avoir à percer ou à modifier la structure de l'aéronef. En outre, il n'est pas nécessaire d'adapter les matelas isolants pour la pose et le montage des dispositifs selon la présente invention.

Le montage de ces divers dispositifs peut se faire sans outils ou tout du moins sans outils spécifiques. Ces dispositifs sont également conçus pour pouvoir être facilement remontés et démontés dans la même position qu'avant démontage.

Enfin, les dispositifs selon la présente invention sont faciles et rapides à mettre en oeuvre. Le temps de montage (et de démontage) est restreint. De plus, si les dispositifs décrits sont réalisés en matière synthétique, il est possible d'avoir des dispositifs de poids réduit, ce qui est bien entendu avantageux pour un montage dans un aéronef.

La présente invention ne se limite pas aux formes de réalisation décrites ci-dessus à titre d'exemples non limitatifs, ni aux variantes évoquées. Elle concerne également toutes les variantes de réalisation à la portée de l'homme du métier dans le cadre des revendications ci-après.

## Revendications

1. Dispositif pour le maintien d'un matelas isolant et la fixation de systèmes pour un aéronef comprenant des cadres (23), une peau (24) et des pièces de liaison entre la peau (24) et les cadres (23), dites clips (26), **caractérisé en ce qu'**il comprend :
- deux équerres (30), chaque équerre présentant une première branche (32) destinée à être fixée à un clip de l'aéronef et une deuxième branche (34) pourvue d'une fente (36),
- une pince (1) en forme d'étrier comportant une base (2) et deux bras (4, 6), chaque bras (4, 6) présentant à son extrémité libre une patte de fixation (17) adaptée pour pouvoir être insérée dans la fente (36) de l'une desdites équerres avec un rebord (19) qui forme une butée s'opposant au retrait de la patte de fixation une fois que celle-ci est insérée dans ladite fente, chaque bras (4, 6) comportant en outre au moins un support (14, 22) pour recevoir un système.

2. Dispositif selon la revendication 1, **caractérisé en ce que** la base (2) est de forme allongée et définit un plan, dit plan de référence, et **en ce que** les bras (4, 6) s'étendent sensiblement perpendiculairement audit plan de référence.

3. Dispositif selon l'une des revendications 1 ou 2, **caractérisé en ce que** la base (2) de forme allongée et les bras (4, 6) ne forment qu'une seule pièce.

4. Dispositif selon l'une des revendications 1 à 3, **caractérisé en ce qu'**au moins un bras (4, 6) porte une rampe (8, 18) s'étendant sensiblement perpendiculairement par apport au bras (4, 6) qui la porte, chaque rampe (8, 18) étant destinée à recevoir ledit support (14, 22).

5. Dispositif selon l'une des revendications 1 à 4, **caractérisé en ce qu'**au moins un support (14, 22) est une pièce distincte munie de moyens d'assemblage, et **en ce que** la pince en forme d'étrier comporte des moyens d'assemblage complémentaires permettant de recevoir ledit support.

6. Dispositif selon la revendication 4, **caractérisé en ce que** chaque support de système (14, 22) comporte une embase (40, 50) adaptée pour s'accoupler avec un logement (10) ménagé sur ladite rampe (8, 18).

7. Dispositif selon la revendication 6, **caractérisé en ce que** les logements (10) ménagés sur les rampes sont tous identiques et les embases (40, 50) des supports de système sont toutes identiques, indépendamment des systèmes à fixer.

8. Dispositif selon l'une des revendications 6 ou 7, **caractérisé en ce que** l'embase (40, 50) de chaque support de système et chacun des logements (10) ménagés sur les rampes présentent des sections complémentaires et comportent des moyens de verrouillage s'opposant au retrait du support de système.

9. Aéronef, **caractérisé en ce qu'**il comprend au moins un dispositif selon l'une des revendications 1 à 8 et des systèmes fixés à l'aide dudit dispositif de fixation.

## Patentansprüche

1. Vorrichtung für den Halt einer Isoliermatte und für die Befestigung von Systemen bei einem Luftfahrzeug, umfassend Spante (23), eine Außenhaut (24) und Verbindungsstücke, sogenannte Clips (26), zum Verbinden zwischen der Außenhaut (24) und den Spanten (23), **dadurch gekennzeichnet, dass** sie aufweist:
- zwei Winkelstücke (30), wobei jedes Winkelstück einen ersten Steg (32) aufweist, der dazu bestimmt ist, an einen Clip des Luftfahrzeugs befestigt zu werden, sowie einen zweiten Steg (34), der mit einem Schlitz (36) versehen ist,
- eine bügelförmige Klemme (1) mit einer Basis (2) und zwei Armen (4, 6), wobei jeder Arm (4, 6) an seinem freien Ende eine Befestigungslasche (17) aufweist, die dazu geeignet ist, in den Schlitz (36) eines der Winkelstücke mit einer Randleiste (19) eingefügt werden zu können, die einen Anschlag bildet, der dem Herausziehen der Befestigungslasche entgegensteht, nachdem diese in den Schlitz eingefügt wurde, wobei jeder Arm (4, 6) ferner zumindest einen Halter (14, 22) zum Aufnehmen eines Systems aufweist.

2. Vorrichtung nach Anspruch 1,
**dadurch gekennzeichnet, dass** die Basis (2) von länglicher Form ist und eine Ebene, die sogenannte Bezugsebene, definiert,
und dass die Arme (4, 6) sich im Wesentlichen senkrecht zur Bezugsebene erstrecken.

3. Vorrichtung nach einem der Ansprüche 1 oder 2,
**dadurch gekennzeichnet, dass** die Basis (2) mit länglicher Form und die Arme (4, 6) nur ein einziges Teil bilden.

4. Vorrichtung nach einem der Ansprüche 1 bis 3,
**dadurch gekennzeichnet, dass** zumindest ein Arm (4, 6) eine Rampe (8, 18) trägt, die sich im Wesentlichen senkrecht zum Arm (4, 6) erstreckt, der diese trägt, wobei jede Rampe (8, 18) dazu bestimmt ist, den Halter (14, 22) aufzunehmen.

5. Vorrichtung nach einem der Ansprüche 1 bis 4,
**dadurch gekennzeichnet, dass** zumindest ein Halter (14, 22) ein separates Teil ist, das mit Montagemitteln versehen ist, und dass die bügelförmige Klemme komplementär ausgebildete Montagemittel aufweist, mit denen der Halter aufgenommen werden kann.

6. Vorrichtung nach Anspruch 4,
**dadurch gekennzeichnet, dass** jeder Systemhalter (14, 22) eine Sitzfläche (40, 50) aufweist, die dazu geeignet ist, sich an einen Aufnahmesitz (10) anzukoppeln, der an der Rampe (8, 18) ausgebildet ist.

7. Vorrichtung nach Anspruch 6,
**dadurch gekennzeichnet, dass** die an den Rampen ausgebildeten Aufnahmesitze (10) alle identisch ausgeführt sind und die Sitzflächen (40, 50) der Systemhalter alle identisch ausgeführt sind, und zwar unabhängig von den zu befestigenden Systemen.

8. Vorrichtung nach einem der Ansprüche 6 oder 7,
**dadurch gekennzeichnet, dass** die Sitzfläche (40, 50) eines jeden Systemhalters und jeder der an den Rampen ausgebildeten Aufnahmesitze (10) komplementär ausgebildete Querschnitte aufweisen und Verriegelungsmittel umfassen, die einem Herausziehen des Systemhalters entgegenstehen.

9. Luftfahrzeug,
**dadurch gekennzeichnet, dass** es zumindest eine Vorrichtung nach einem der Ansprüche 1 bis 8 und Systeme enthält, die mit Hilfe der Befestigungsvorrichtung befestigt sind.

## Claims

1. Device for holding an insulating blanket and for fastening systems for an aircraft comprising frames (23), a skin (24) and connecting pieces between the skin (24) and the frames (23), referred to as clips (26), **characterized in that** it comprises:
- two brackets (30), each bracket having a first branch (32) intended to be fastened to a clip of the aircraft and a second branch (34) provided with a slot (36),
- a stirrup-shaped clipping member (1) comprising a base (2) and two arms (4, 6), each arm (4, 6) having at its free end a securing lug (17) adapted for being able to be inserted into the slot (36) of one of the said brackets with a rim (19) which forms a stop countering withdrawal of the securing lug once the latter is inserted into the said slot, each arm (4, 6) further comprising at least one support (14, 22) for receiving a system.

2. Device according to claim 1, **characterized in that** the base (2) is of elongated shape and defines a plane, referred to as reference plane, and **in that** the arms (4, 6) extend substantially perpendicular to the said reference plane.

3. Device according to one of claims 1 or 2, **characterized in that** the base (2) of elongated shape and the arms (4, 6) form only a single part.

4. Device according to one of claims 1 to 3, **characterized in that** at least one arm (4, 6) bears a ramp (8, 18) extending substantially perpendicular in relation to the arm (4, 6) which bears it, each ramp (8, 18) being intended to receive said support (14, 22).

5. Device according to one of claims 1 to 4, **characterized in that** at least one support (14, 22) is a separate piece equipped with assembly means, and **in that** the stirrup-shaped clipping member comprises complementary assembly means making it possible to receive the said support.

6. Device according to claim 4, **characterized in that** each system support (14, 22) comprises a base (40, 50) adapted for being coupled with a housing (10) provided on said ramp (8, 18).

7. Device according to claim 6, **characterized in that** the housings (10) provided on the ramps are all identical and the bases (40, 50) of the system supports are all identical, irrespective of the systems to be fastened.

8. Device according to one of claims 6 or 7, **characterized in that** the base (40, 50) of each system support and each of the housings (10) provided on the ramps have complementary sections and comprise locking means countering withdrawal of the system support.

9. Aircraft, **characterized in that** it comprises at least one device according to one of claims 1 to 8 and systems fastened with the aid of the said fastening device.
